# EUROPEAN PATENT APPLICATION

(11) **EP 0 999 681 A1**
(43) Date of publication of application: **10.05.2000**
(21) Application number: 98310640.2
(22) Date of filing: 23.12.1998
(51) Int. Cl.: H04M 1/247

(54) **Display terminal**

(30) Priority: 05.11.1998 GB 9824307
(71) Applicant: LUCENT TECHNOLOGIES INC., Murray Hill, New Jersey 07974-0636 (US)
(72) Inventor: Beesley, Graham Edgar, Winchester, Hampshire S021 2LX (GB); Kurien, Thomas Valayil, Winchester, Hants. S023 8SR (GB); Boothroyd, Jane Melanie, Winchester, Hampshire S021 1JU (GB); Cook, Christine Dorothy, Winchester, Hampshire S023 7RB (GB)
(74) Representative: Williams, David John

(57) **Abstract**

A display terminal, for example in the form of a telephone handset (1), includes a display (5) and a keypad (6) for entering data into the terminal. Associated with the display are four "context sensitive" keys (7-10) which are positioned in relation to the display in such a way that the display itself indicates the current purpose of the keys. The displayed purpose of each key may change, under the control of the electronic circuitry and underlying computer program, in accordance with the context of the terminal - in other words, its current operational state. The use of such context sensitive keys should enable a reduced number of keys to be used and to avoid, at least for the most common functions, the requirement to press multiple keys.

## Description

This invention relates to display terminals, that is terminals for control, data entry or similar purposes, and which comprise a number of keys, a display and associated electronic circuitry for carrying out the functions of the terminal.

Such terminals, which are generally portable, are used for a wide variety of control, data entry and similar applications. Examples include mobile telephones and control equipment for machinery. Their portability imposes constraints on the desirable size and weight of the terminal and efforts have for long been made to reduce both the size and weight whilst at the same time maintaining the functionality of corresponding fixed equipment.

One way to achieve both size and weight reduction is to reduce the number of buttons on the terminal. This can be achieved, for example, by allocating sequences of key strokes to particular functions, with the lesser-used functions being allocated the more complicated sequences. However, this method is not user friendly because, for efficient operation, the user is required to learn the keystroke combinations, and the requirement to press at least two, and often more, keys in sequence slows down the operation.

The present invention seeks to enable a reduced number of keys to be used but to avoid, at least for the most common functions, the requirement to press multiple keys.

According to the invention, there is provided a terminal comprising a display, one or more keys, and electronic circuitry for carrying out the functions of the terminal in accordance with user input via said key or keys, said terminal being characterised by means for displaying, on said display, the function of the or each key according to the current context of the terminal.

The invention is particularly directed at terminals which are portable and which are connected to their associated machinery by physical wires - trailing leads or the like - or by wireless methods, including infra-red.

Preferably the or each key is physically positioned in relationship to the display such that the user can readily make a visual connection between a particular key and the display of its function.

For the purpose of the invention, the electronic circuitry includes means, advantageously software controlled, for determining the current context of the terminal and for displaying on the display a function for each key appropriate to that context. By context is meant the current operational state the terminal is in in the sequence of operations dictated by the terminal's functionality. Changes in context may result from user intervention - for example the user pressing a particular key - or from external events not under the control of the user - for example a signal received from outside the terminal which instructs the terminal to take some action.

The concept of context may be likened to navigating around menus on a computer screen - when the computer is first switched on, a first menu appears and the computer waits for the user to choose what to do next. This could be regarded as a first context of the computer. When the user makes a selection, the computer may then present a further menu, and waits once again. This could be regarded as a second context of the computer. In this example, the context change from the first context to the second context was made by user intervention - typically by the user pressing one or more keys - but the context could also change as a result of an event not under the control of the user, such as the completion of some operation under the control of the terminal, or some external intervention received by the terminal. For the purpose of receiving such external interventions, the terminal may further comprise means whereby it may exchange signals with the exterior, using hard wiring or wireless means.

Although in theory only one key needs to be provided, in practice the functionality required of most terminals will require multiple keys, typically 3 or 4. These "context-sensitive" keys may be the only keys on the terminal. More likely, however, the terminal will include additional non-context-sensitive keys for data entry or other purposes, for example an alpha numeric keypad. The context-sensitive key or keys are advantageously arranged in physical proximity to the display; in the case of a large multi-line display, it is preferred that a particular area of the screen is allocated to providing the display for indicating the function of particular context-sensitive keys, the keys being physically arranged so that the user can make the association with the displayed function, and the particular key. In the case of overcrowding, physical indicia may be used to make the visual association between the key and its displayed function.

In certain circumstances, means may be provided for highlighting the function display of a particular key in order to direct a user's attention to that key. For example, this may be achieved by colouring the function display for a particular key differently to the others, or making it blink.

It will be seen that the displayed functions of the context sensitive key or keys are provided by the electronic circuitry which in turn will be under the control of software or firmware. Thus the basic terminal could initially be made general purpose in the sense that it carries out only functions which are common to all or a group of applications, the electronic circuitry being controlled by software or firmware packages which are installed on the terminal to give it specific desired functionality. Thus, to give the example of a telephone terminal, a general purpose telephone terminal, having basic functionality associated with all telephone systems may have installed on it software or firmware which is operable to control the electronic circuitry to give more specific functionality, such as:-
Hospital telephone system
Telephone call centre
Financial application
Business communications system
Different language systems

Once the particular package has been installed in the terminal the context sensitive operation, as described above, will be dictated by the particular features available from that package. The specific example of a business communications application will be described in detail below, by way of example only, and with reference to the accompanying drawings in which:-
Figure 1 is a plan view of a display terminal for use in the present invention, in the form of a handset forming part of a telephone system;
Figure 2 is a simplified block diagram of the electronic circuitry within the terminal; and
Figures 3 to 8 are block diagrams showing the sequence of potential actions and screen displays during operation of the handset of Figure 1.

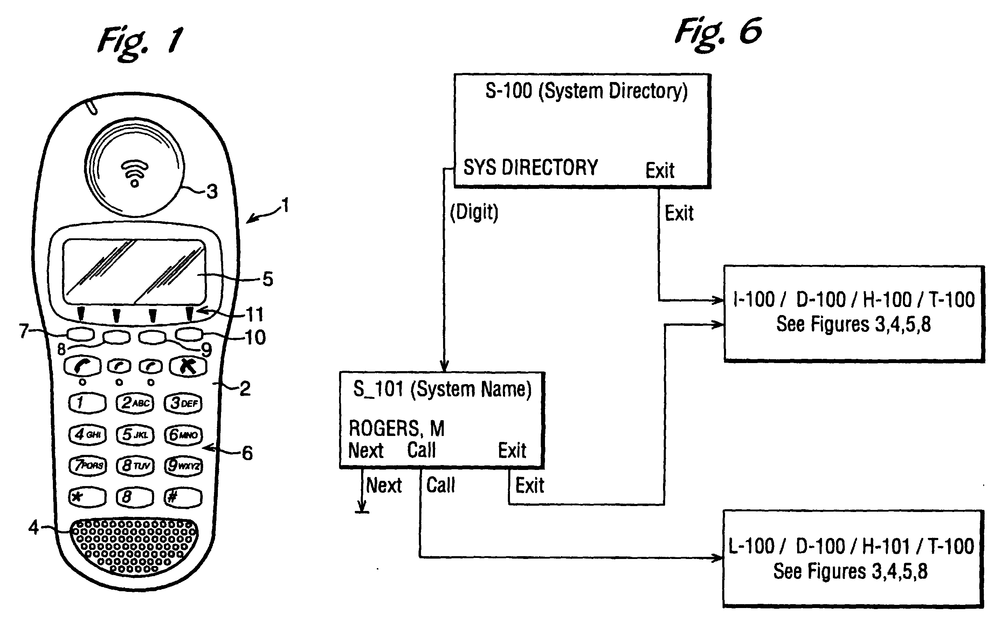

Referring firstly to Figure 1 the terminal takes the form of a handset 1 for use in a business communications system. The handset 1 comprises a handheld casing 2 which contains the electronic circuitry which operates the telephone. This includes a microprocessor and associated circuitry controlled by a software package and a transceiver by which the handset may communicate by radio with a base station or stations (not shown) which will normally be hard-wired to the public telephone network for external communications. In any one system, a plurality of handsets 1 will be provided and, depending upon the circumstances of operation, possibly more than one linked base station as well. The handsets can accordingly communicate with one another internally, via the base station or base stations, or externally via the base station and the public network.

As is conventional in such handsets, there is provided an earpiece 3 and microphone 4, a display 5 and a keypad 6 containing 0-9 keys and other conventional control keys.

In the handset of the invention, four extra buttons 7-10 are provided immediately beneath the display 5. These are the context sensitive keys referred to above, and their purpose will change according to the context that the handset is currently in. The display 5 is set up so as to dynamically display the current purpose of each of keys 7-10 in a manner which will enable the user to make the association between the displayed purpose and the particular key to which that purpose applies. To this end, arrowheads 11 or similar indicia may be printed on the handset to clarify the physical association between a particular area of the display 5, and each of keys 7-10.

Only the lower line of the display 5 needs to be used for this purpose; the remainder of the display can be used in the conventional manner.

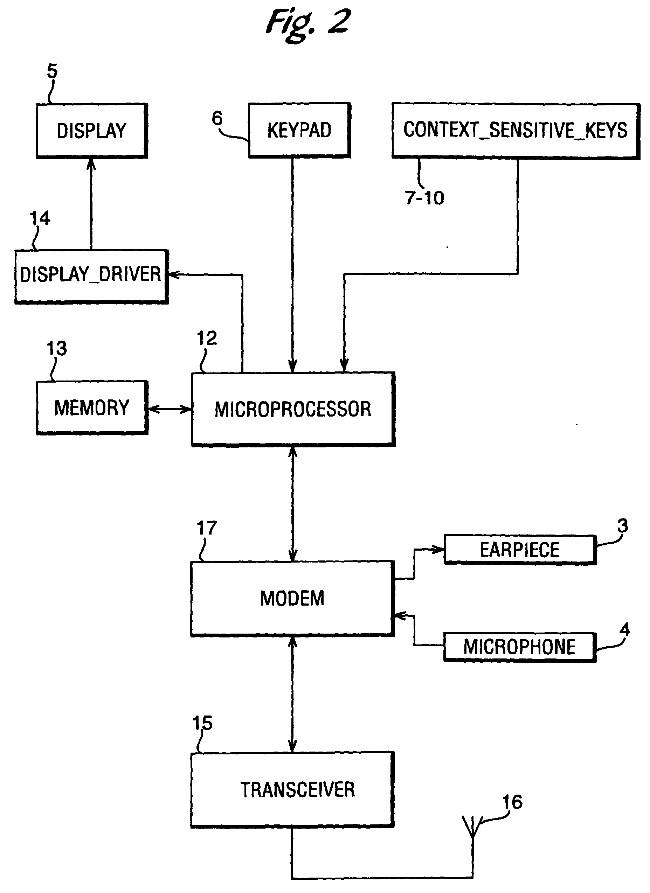

Referring now to Figure 2 there is shown a simplified block diagram of the electronic circuitry which operates the telephone. Central control of the operation of the circuitry is realised by a dedicated microprocessor 12 having a memory 13. The display output from the microprocessor is taken via a display driver 14 to the display 5. Communication with the base station(s) is achieved by means of a transceiver 15 having an antenna 16 which is in two way contact with the microprocessor via a modem 17. User input to the microprocessor is made via the keypad 6 or context sensitive keys 7-10.

The main objective of a context sensitive user interface is to offer a simple and obvious terminal operational paradigm for end-users. Communication systems are becoming increasingly complex. For example business communications systems have developed numerous software features, network capabilities and vertical applications. Communication system manufacturers are continually enhancing their offers with additional features with each new release. Business communication terminals, with their associated user interface, provide the primary means of realising these new feature capabilities for end-users. In addition to new features, end users also demand smaller terminals to conserve desk space. Because of these contradictory requirements, traditional business communications terminals are very complex and require special training in order to use them.

In general, wireless terminals are very compact in size, and lightweight, so that they may be easily carried. The smallness in size limits the amount of physical space available for user interface design. In addition, users would like to see the same set of features that are offered on wired business terminals to also be available on wireless terminals. These requirements makes the wireless terminal user interface extremely complex in nature. The use of context sensitive keys hides the complexities of such wireless business communication interfaces and provides a simple and easy to use user interface to end-users.

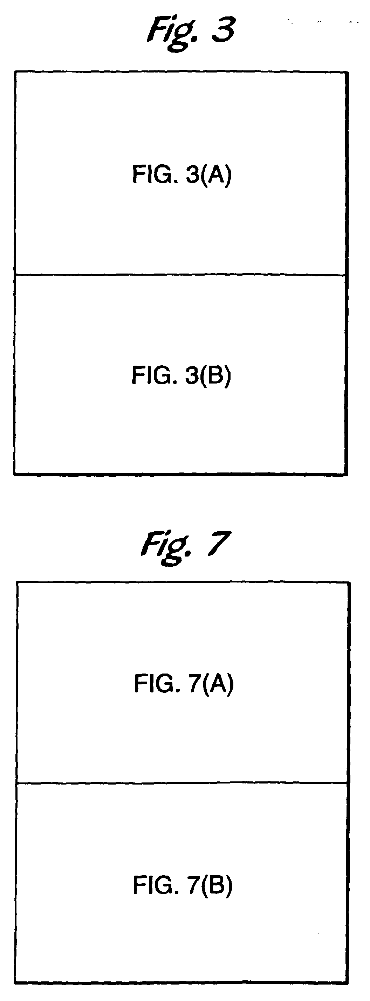

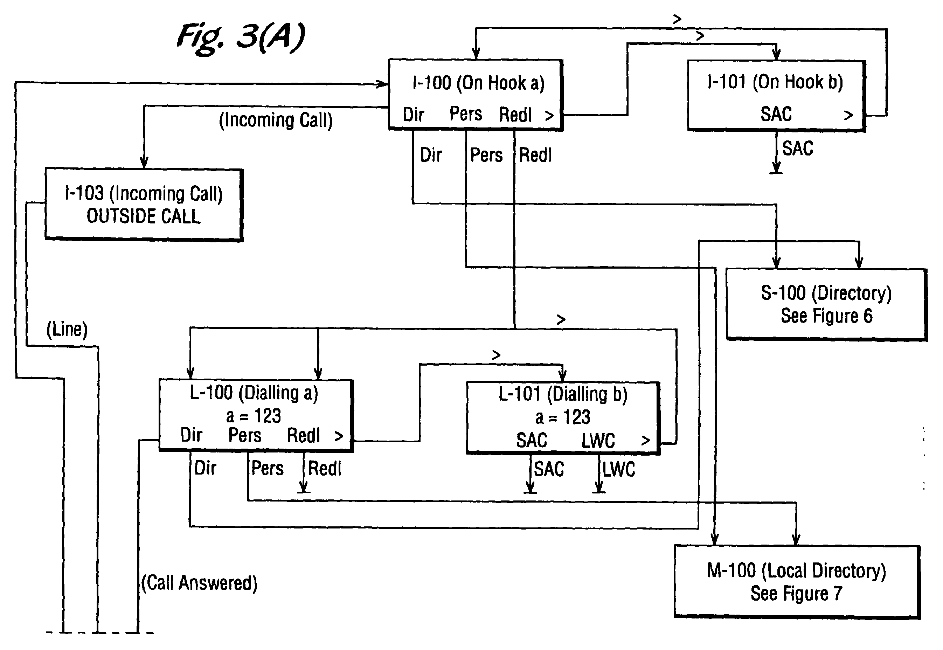

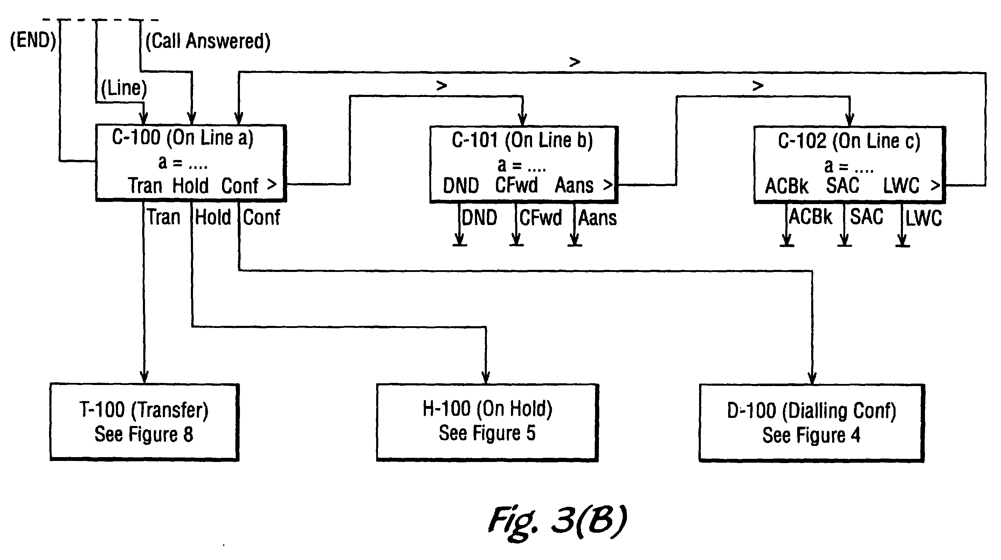

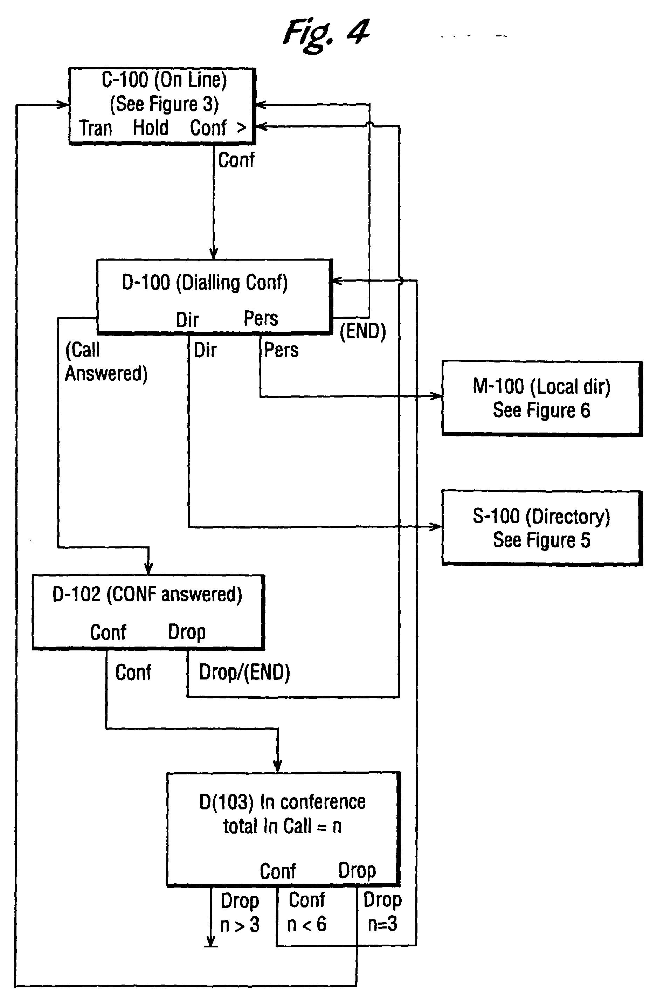

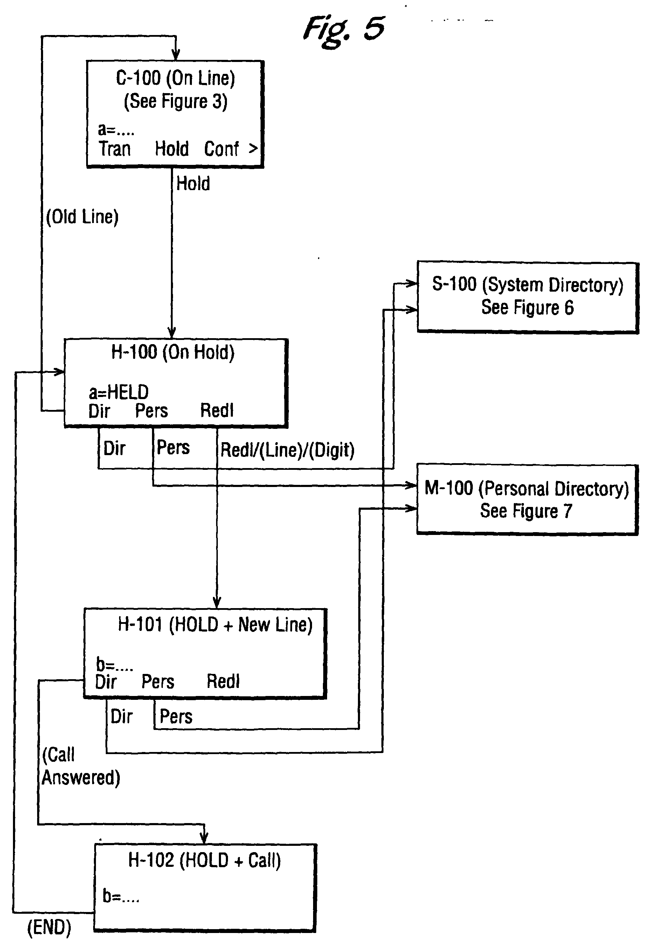

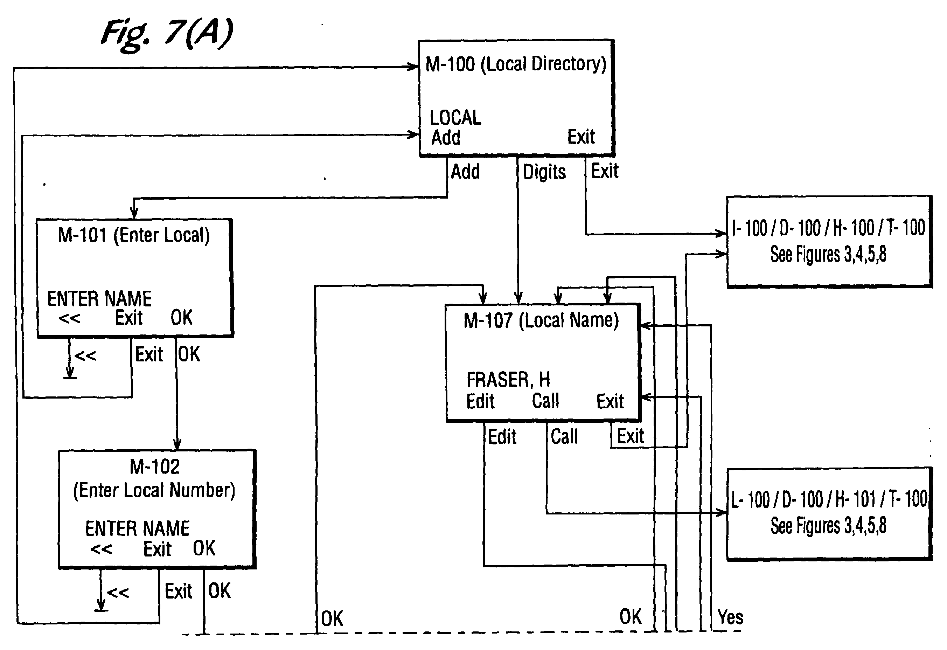

Figures 3 to 8 show the sequence of operations in an exemplary business communications system. In these Figures, each of the boxes is a diagrammatic representation of the display 5 and in particular the bottom line thereof which displays the appropriate purpose for each of the buttons 7-10 on the handset. It will be noted that the displayed purpose may either be a feature option, or a user action. As can be seen, codes have been used to express the purpose of the keys in a way which will fit on the available width of display but at the same time be readily meaningful to the user. The meaning of these codes is as follows:-
- Dir: system directory
- Pers: personal directory
- Redl: redial
- >: overflow - press for more selections
- SAC: send all calls
- LWC: leave word calling
- Tran: transfer
- Hold: hold
- Conf: conference
- ACBk: Auto-Callback
- Drop: drop a party from a conference call
- Exit: exit
- DND: do not disturb
- Add: add new name to directory
- OK: OK
- No: no
- Num: number
- Call: call
- Edit: edit directory entry
- Name: name
- Yes: yes
- Erase: erase
- Del: delete character
- >>: move through displayed names
- <<: backspace
- CFwd: Call Forward
- Aans: Auto-Answer

The boxes in Figures 3 to 8 also show the line of display 5 above the bottom line which, if not blank, displays some appropriate message, according to the context. Each of the boxes shows the display in a particular context, as a reference represented by number for the context, such as I-100 or H-102, together with a title to assist clarity; these are not however, displayed. The lines between boxes represent the route taken when particular keys 7-10 are pressed.

A typical width of display 5 is 102 pixels, which gives 17 characters. The labels for the keys 7-10 are a maximum of 4 characters each, with at least 2 pixels in between.

Reference is now made specifically to Figure 3 which illustrates a basic call. When idle, the handset displays the "Home screen" I-100/I-101. In this context, the users name may optionally appear in the line above the bottom line.

The home screen is actually comprised of two individual contexts: I-100 and I-101. The primary context I-100 in idle mode is programmed to offer the following labels for the context sensitive keys:-
- Key 7:: Dir
- Key 8:: Pers
- Key 9;: Redl
- Key 10:: >

In the event that an external call is received, via the handset transceiver) the context of the handset 1 changes to I-103. In context I-103, the display displays a text such as "INCOMING CALL" in the line above the bottom line, but nothing is displayed in the bottom line because none of the context-sensitive keys 7-10 are active at this time. If a line is established with the incoming caller's telephone, then the context of the terminal changes to C-100, with the screen display illustrated.

The online condition is actually composed of three contexts: C-100, C-101 and C-102 because the number of options is greater than four, which is the number of context-sensitive keys. Accordingly, the right-hand option (key 10) for each of contexts C-100, C-101 and C-102 is ">", namely "press for more choices".

Returning to the home context I-100, we will consider what happens when each of the keys 7-10 is pressed:-

### Key 7 (Dir)

Pressing key 7 causes the handset to change to context S-100 which is shown in detail in Figure 6. Context S-100 is the system directory and this fact is displayed. On the bottom line, the only active context-sensitive key is key 10, "Exit" which returns the user to the home context I-100, or whichever other context they came from. Entry of digits from the keypad 6 when in context S-100 will automatically institute a search of the system directory for the name being entered, and the handset moves to context S-101, with the name being displayed on display 5 as it is entered.

From context S-101,the pressing of key 10, "Exit" will return the user to the home context 1-100, or whichever other context they came from. Pressing of key 8, "Call" will cause the handset to change to the first of two dialling contexts L-100 and L-101, shown in Figure 3, in which dialling to the selected caller, via the wireless link, is effected. In the event that the call is answered, the handset changes to the online context C-100, referred to above. In the event that the call fails, various options are available, as shown, within the dialling contexts L-100 and L-101, by pressing the appropriate context-sensitive key 7-10 as shown in the labels in the bottom line of the display in contexts L-100 and L-101.

### KEY 8 (Pers)

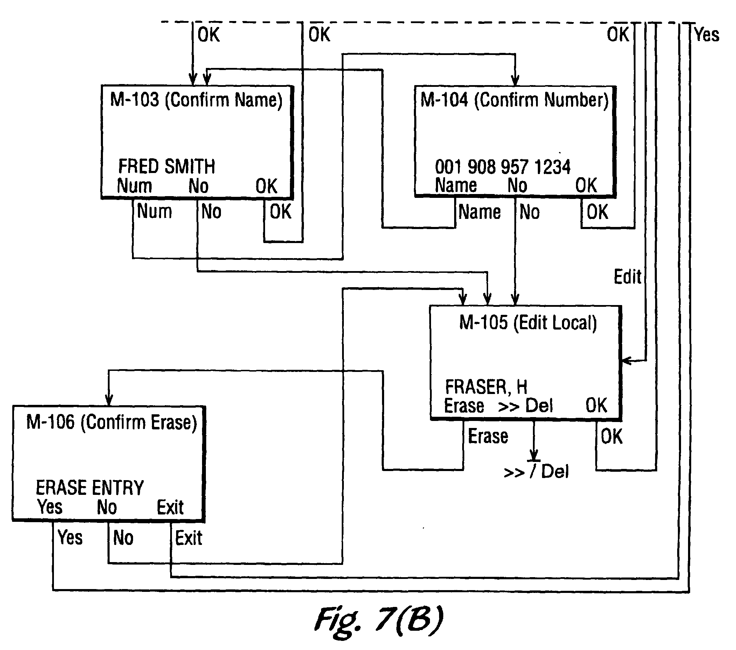

Pressing key 8 from the home screen I-100 causes the handset context to change to M-100 which is shown in detail in Figure 7. Context M-100 is the entry context to the individual user's personal directory contexts M-100 to M-107. With the explanation already given, it should be clear how a name can be found from the directory, and dialled. Another option from context M-100 is context sensitive key 7 (Add) which enables the user to add a new name to their personal directory. Incidentally, this directory may be stored locally in the handset or, more likely, in the base unit or other system electronics. Context M-101 gives three options, <<, Exit and OK on the context sensitive keys (key 8, 9 and 10). In addition, the dialpad 6 can be used to enter a new name to be added to the personal directory. To do this, letters are entered using the dialpad. The keys 2 to 9 each have 3 or 4 letters associated with them. Letters are selected by pressing the key the correct number of times. For instance 2 is labelled ABC, one press gives A, 2-B and 3-C. Entry of a letter is terminated by starting to select the next letter using a different key. # is used as a termination character if necessary. For instance to enter the letters BA the sequence 22#2 is used. This distinguishes it from C which would be 222. The << option (key 8) can be used to backspace if a mistake is made. Spaces are indicated by *. Entry of letters, spaces and backspace leaves the handset in context M-101. The final option from context M-100 is context sensitive key 10 (Exit) which has the same effect as described above.

### Key 9 (Redl)

Pressing key 9 causes the handset to change to dialling context L-100/L-101 which has already been discussed.

### Key 10 (>)

Pressing key 10 causes the handset to change to home context I-101 which provides two further home context options, namely context sensitive key 8 (SAC) and context sensitive key 10 (>) which returns the user to context I-100.

It is believed that the details given above of the various options and actions which are possible from the home screen are sufficient for an understanding of the remaining figures without detailed explanation. It will be noted that some of the options from some of the contexts are not shown in detail, for the sake of clarity. This applies to the following options:-
SAC
LWC
DND
CFwd
Aans
Acbk

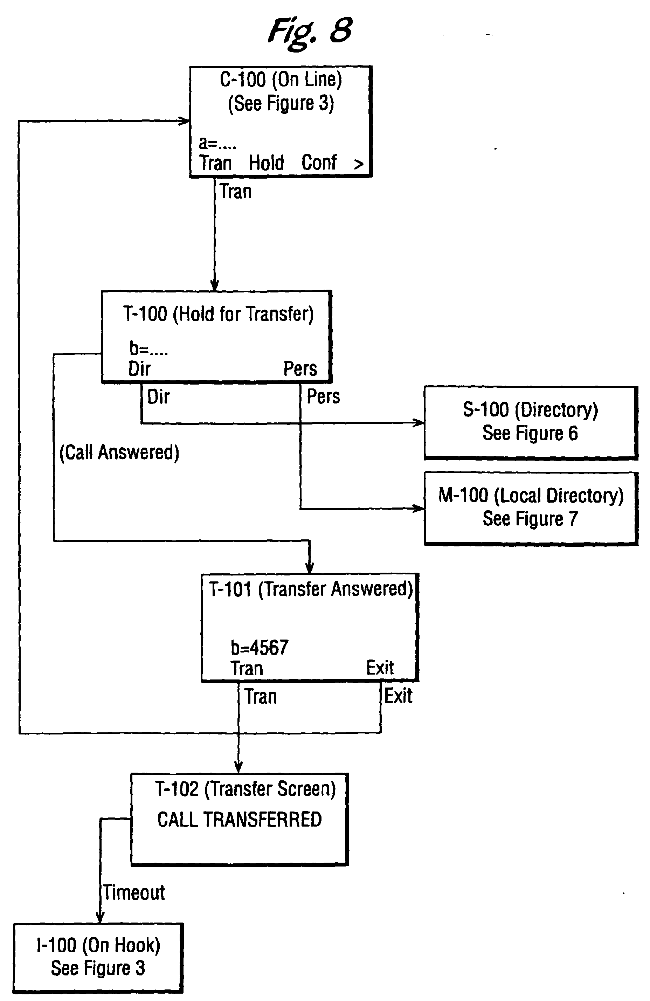

Of the remaining drawings, Figure 4 describes the contexts involved in conference dialling which is one of the options from the online context C-100 (key 9), Figure 5 describes the contexts involved in holding an online call from the "hold" option in online option C-100 (key 8), Figures 6 and 7 describe the contexts involved in the system and personal directories respectively, as already described, and Figure 8 describes the contexts involved in transferring a call, which is one of the options from the online context C-100 (key 7). It will also be noted that some contexts, such as the system directory context S-100, can be accessed from different places, and where the user will return to will depend upon where they accessed from.

The following specific notes will assist an understanding of certain contexts in Figures 4, 6 and 7:-
In context D-103 (Figure 4), if option Drop is selected (key 9) and the number of persons (n) on the conference call is greater than 3, then the last party added will be dropped from the call, the number n is reduced by 1, and the context remains as D-103.
In context S-101 (Figure 6) selection of the Next option (key 7) will move to the next name on the directory list and leave the handset in context S-101. If digits are pressed in context S-101, these digits will be converted to their associated letters (see keypad 6 in Figure 1), and used to match the names currently in the directory. Further digits are used to extend the search. The handset remains in context S-101.
Context M-102 (Figure 7) is similar to context M-101, referred to above, but numbers are entered instead of letters. The use of the >> key is the same as for context M-101. Context M-105 is used to edit an existing entry in the personal directory, following selection of the Edit option from context M-107 (key 7). The >> key is used to move through the displayed names. The DEL key (key 9) will delete the current character. Use of either of these leaves the handset in context M-105.

The computer program which controls the operation of the terminal including, in particular, the functions of the context sensitive keys, is run on the microprocessor 12 in association with the memory 3 illustrated in simplified manner in Figure 2. The attached Appendix comprises a program listing in "C" to show how the state table which drives the context sensitive keys might be implemented in software. The listing will be understood by those skilled in the art, and will not be described in detail.

Although described above in relation to a generalised business communications package, it will be clear that the invention can be applied to a variety of situations. End-users can download to their hardware system various firmware packages to customise their communication operations. As an example, in a hospital environment, a special software package may be downloaded to the wireless terminal through the hardware system in order to support specialised hospital features like Nurse Call, Silent Page, Consult Mode and Paging features. As a second example, in a call centre environment, the operation of the softkeys will change to provide support for call centre application features like After Call Work, Auto Answer, Available to take call, etc.

The value and benefits of context sensitive terminals are seen to be the following:-
1) The context sensitive "softkey" operation will make feature access easier by providing the most appropriate set of choices to the end-user that are a function of the current state of the terminal. These choices are derived based on historical profiles of user actions. Context sensitive operation analyses the huge list of terminal features and displays the features that are most appropriate in each mode of operation of the terminal. Because of this, the user will not have to search for applicable features from a huge list. As appropriate, only desired features will be presented to the users through the context sensitive keys.
2) User errors and mistakes through inappropriate choices are significantly reduced since the display presents only the applicable features in the various modes of the terminal.
3) Productivity and efficiency are greatly improved since context sensitive softkeys make features access obvious, feature operation easy, and reduces error conditions.
4) Switch manufacturers will not be burdened with how to present their communications features to portable terminals. Context sensitive portable terminals may be adapted to support any kind of feature set from various communication systems through to customisation of the context sensitive operation.

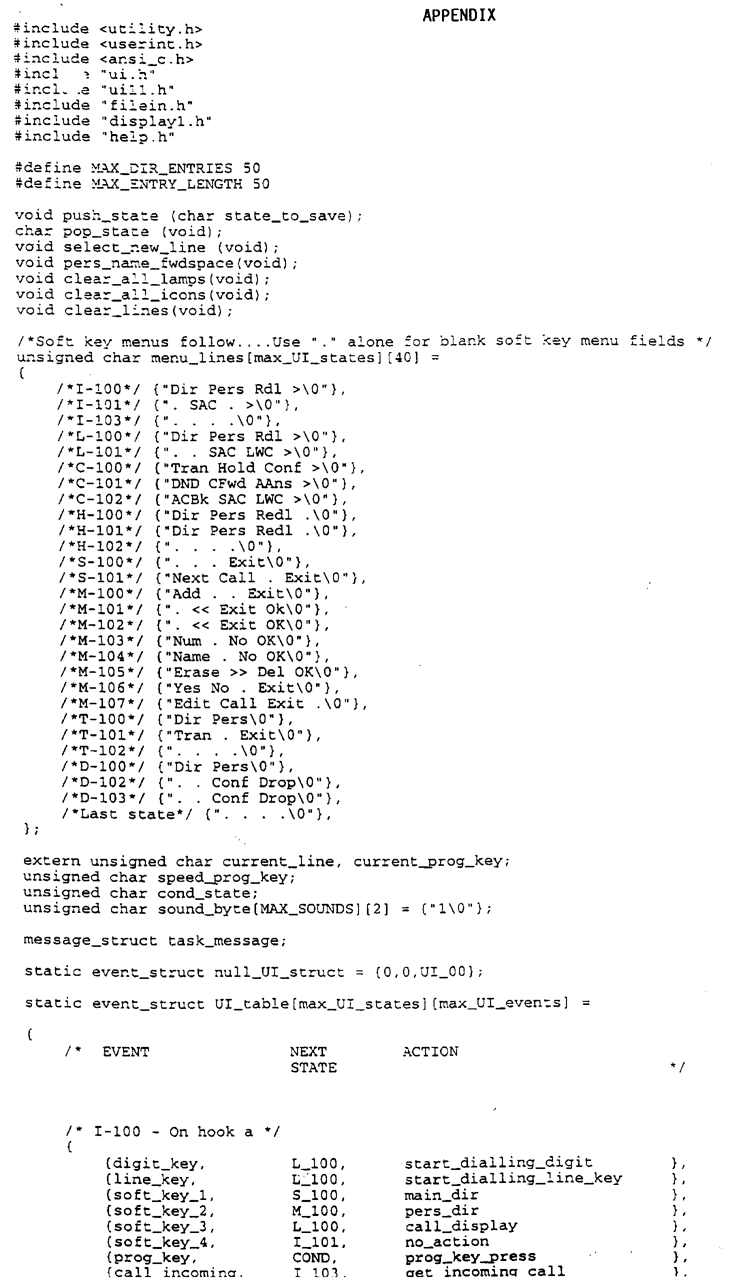

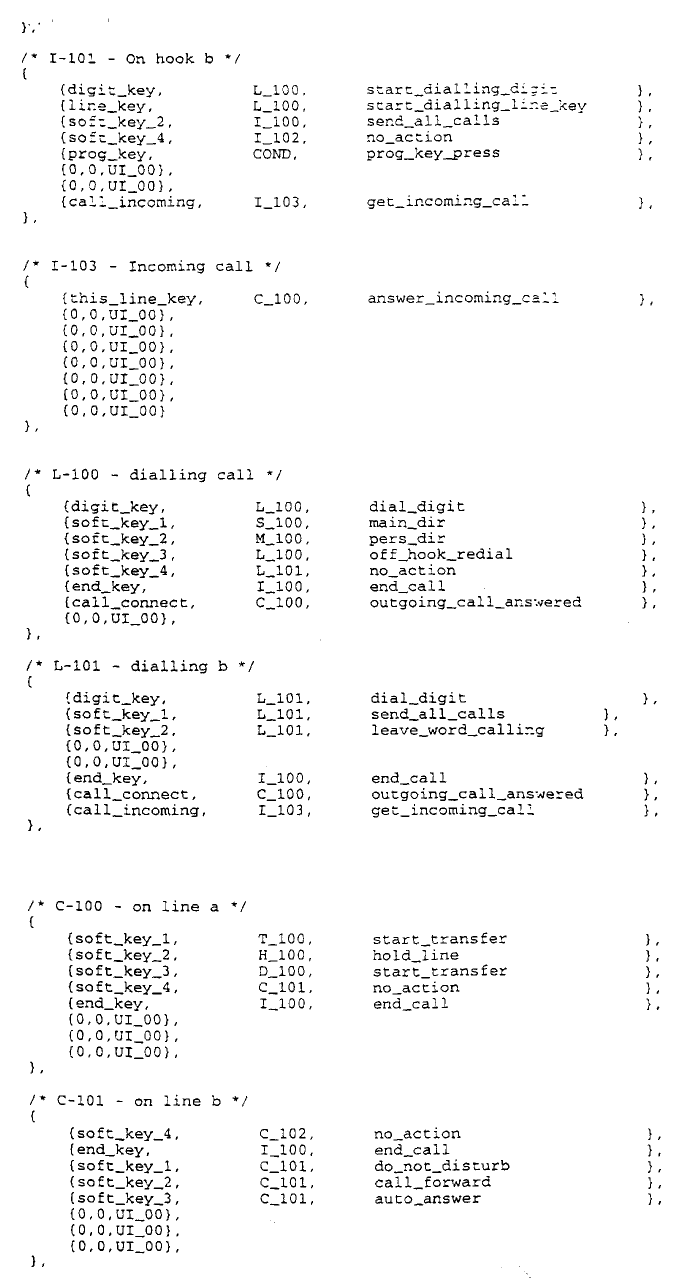

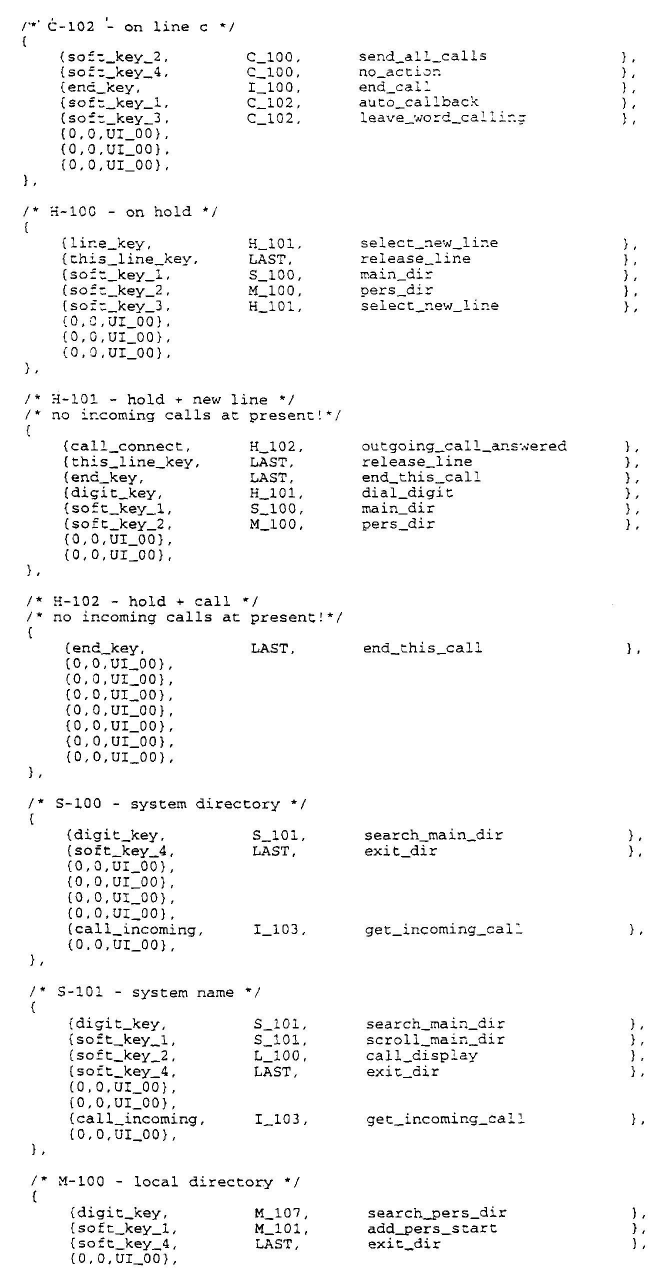

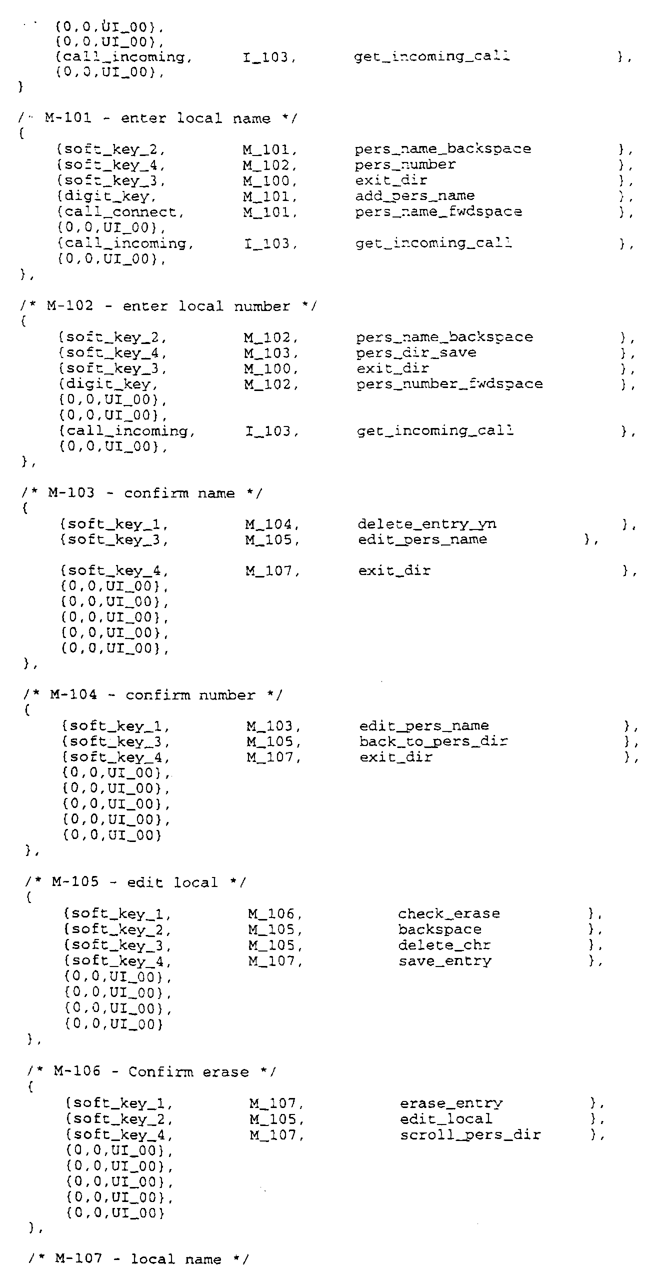

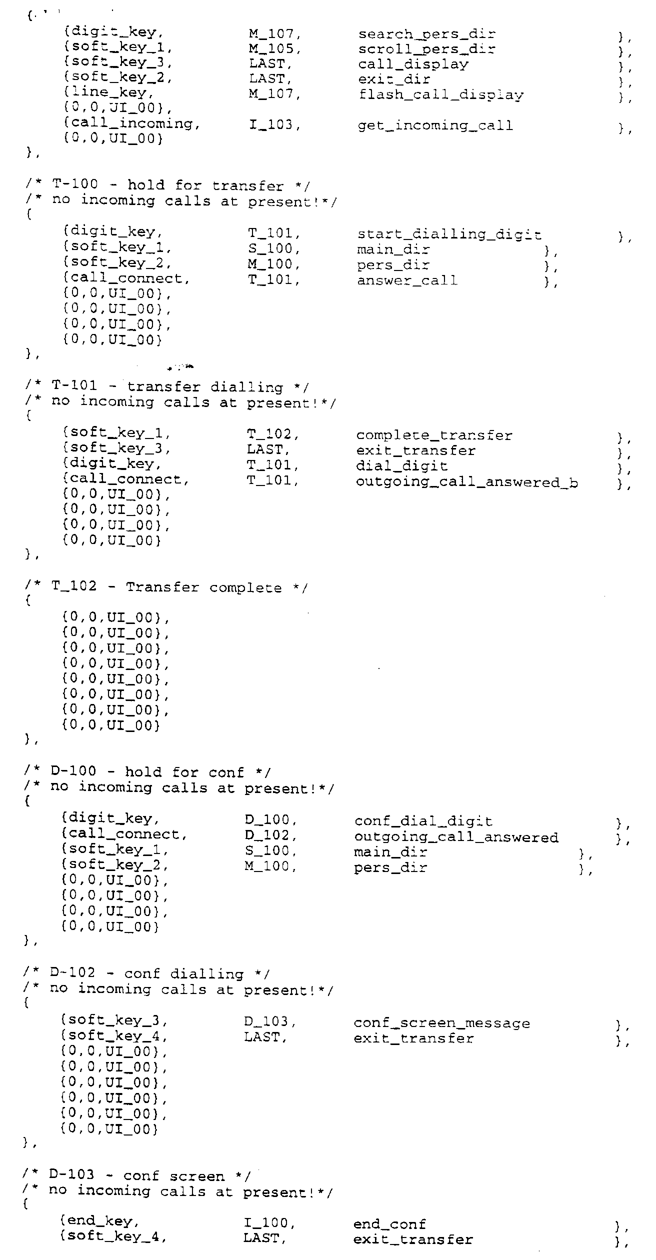

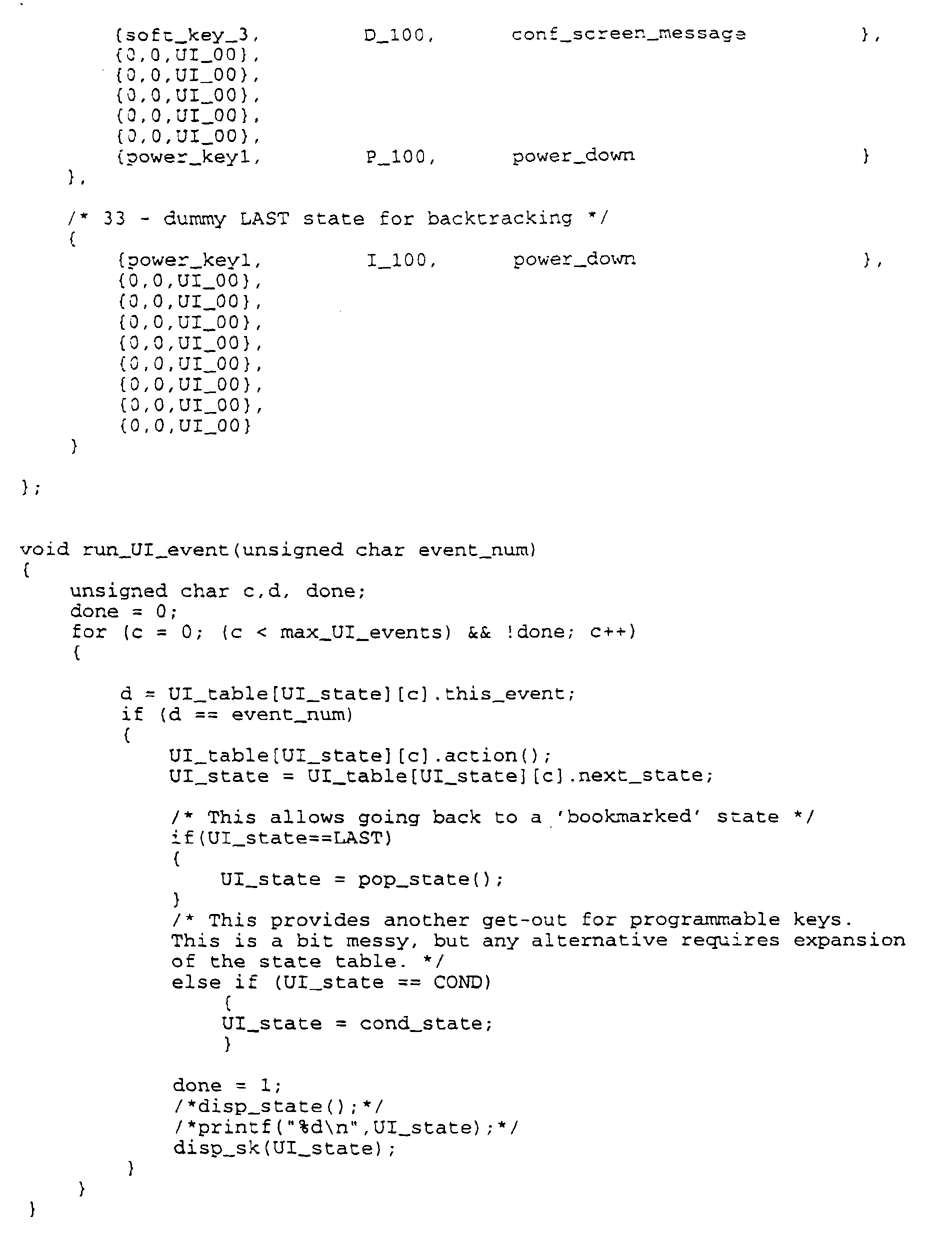

## Claims

1. A terminal comprising a display, one or more keys, and electronic circuitry for carrying out the functions of the terminal in accordance with user input via said key or keys, said terminal being characterised by means for displaying, on said display, the function of the or each key according to the current context of the terminal.

2. A terminal as claimed in claim 1 wherein the or each key is arranged in physical proximity to the display so that a user can make a visual connection between each key and the display of its function on the display.

3. A terminal as claimed in claim 2 wherein a particular section of the display is allocated to providing the display for indicating the function of the keys, the keys being physically arranged adjacent said section, and wherein the remainder of the display is used to display other information relating to the operation of the terminal.

4. A terminal as claimed in any one of claims 1 to 3 in which the function of each of said one or more keys is dictated on a dynamic basis by the current context of the terminal.

5. A terminal as claimed in claim 4 wherein said electronic circuitry comprises means for determining the current context of the terminal, means for allocating to the or each key a function appropriate to that context, and means for displaying on the display the allocated function for the or each key at a position on the display such that the user will be able to make a visual connection between that key and its allocated function.

6. A terminal as claimed in claim 5 wherein said electronic circuitry includes a microprocessor under the control of software.

7. A terminal as claimed in any one of claims 4 to 6 in which, in addition to said one or more keys, the terminal is equipped with further keys whose function is fixed, and is not dictated on a dynamic basis by the current context of the terminal.

8. A terminal as claimed in any one of the preceding claims wherein means are provided for highlighting the function display of the or any one of each of said one or more keys in order to direct a user's attention to that key.

9. A terminal as claimed in claim 8 wherein the highlighted key or keys are a different colour to the remainder.

10. A terminal as claimed in claim 8 wherein the highlighted key or keys are caused to blink.

11. A terminal as claimed in any one of the preceding claims in the form of a portable telephone handset.
